# EUROPEAN PATENT SPECIFICATION

(11) **EP 2 942 557 B1**
(45) Date of publication and mention of the grant of the patent: **09.08.2017**
(21) Application number: 14832250.6
(22) Date of filing: 03.06.2014
(51) Int. Cl.: F17D 5/06, G01N 29/04

(54) **ULTRASONIC DEFECTOSCOPE SENSOR CARRIER**
SENSORTRÄGER FÜR ULTRASCHALL-DEFEKTOSKOP
SUPPORT DE CAPTEURS POUR DÉFECTOSCOPE ULTRASONIQUE

(30) Priority: 30.07.2013 RU 2013135544
(43) Date of publication of application: 11.11.2015
(73) Proprietor: Oil Transporting Joint Stock Company "Transneft" (JSC "Transneft"), Moscow 119180 (RU); Joint Stock Company "Transneft Diascan", Lukhovitsy, 140501 (RU)
(72) Inventor: MIROSHNIK, Aleksandr Dmitrievich, Moskovskaya obl., Kolomna, 140406 (RU); CHERNYSHOV, Oleg Grigoryevich, Moskovskaya obl., Kolomna, 140406 (RU); SOLOMIN, Sergei Alekseevich, Moskovskaya obl., Kolomna, 140402 (RU); MEDELEV, Pavel Anatolyevich, Moskovskaya obl., Kolomna, 140411 (RU); TREIEROV, Sergei Vladimirovich, Moskovskaya obl., Kolomna, 140410 (RU)
(74) Representative: Glawe, Delfs, Moll
(86) International application number: PCT/RU2014/000410
(87) International publication number: WO 2015/016744

(56) References cited:
- DE-U1- 20 306 958
- RU-C1- 2 204 113
- RU-U1- 38 403
- RU-U1- 38 948
- US-B2- 7 178 418
- US-B2- 7 548 059

## Description

The claimed utility model relates to devices for monitoring technical condition of oil trunk pipelines and oil-product pipelines by passing an ultrasonic defectoscope (hereinafter, "flaw detector") with ultrasonic sensors installed thereon inside a pipeline.

A device for in-line examination of great-length pipeline by non-destructive methods is known in the art that is described in RU Patent No. 2204113 C1, wherein a sensor carrier comprises a plurality of sensor carriers kinematically connected therebetween and capable of testing elastic buckling in the radial direction from the carrier axis. The main drawback of this device is that sensor carriers are made as elastic elements adjoining the pipeline wall and kinematically connected therebetween, which results in measurement errors.

The closest prototype is a device for in-line ultrasonic monitoring of small-diameter pipelines, as described in RU Patent No. 38948 U1, wherein the housing of the sensor carrier is made in the form of a single rigid housing. The main drawback of this device is that the carrier of this design may be used in pipelines of small diameter only, and there certain limitations for flaw detector passing through small-radius pipeline branches.

The technical effect of this utility model consists in improvement of diagnostic information accuracy due to more compact arrangement of sensors on the sensor carrier as well as the flaw detector capability of passing through small-radius pipeline turns.

This technical effect is achieved due to the fact that the ultrasonic flaw detector sensor carrier consists at least of one section. This section comprises a central rod with a head fork and a tail fork arranged thereon. Centering collars are attached to the flanges of the head and tail forks, and a polyurethane head cone, a polyurethane tail cone and a ring set are arranged between the centering collars. The ring set is a cylinder with a central hole and helical slots on the outer cylindrical surface. Ultrasonic sensors are arranged in the helical slots and fixed by covers, by means of screws. The outer diameter of the ultrasonic flaw detector sensor carrier has a value that is not greater than a maximum permissible narrowing of a pipeline.

The ring set has two groups of sleeves that are equally spaced one by one along the circumference: sleeves with a smooth hole and sleeves with a threaded hole. The front ring of the ring set is fixed on the head cone with fastening screws that are screwed into the the threaded holes of the head cone through the sleeves with a smooth hole. Next rings of the ring set are fixed with fastening screws through the sleeves with a smooth hole in the threaded holes of the sleeves of the previous rings. This allows to arrange the fastening screws in the staggered order, which permits elastic deformation of the ring set employed in the ultrasonic flaw detector sensor carrier when the latter passes through turns in small-radius pipelines and prevents the flaw detector from getting stuck within a pipeline. The ultrasonic flaw detector sensor carrier may be centered, and a required space between the sensors and the pipeline inner surface may be obtained, by means of the polyurethane collars.

The ring set structure with ultrasonic sensors may have various embodiments, which expands diagnostic capabilities of the ultrasonic flaw detector: namely, if the ultrasonic flaw detector has an inclined position, it acquires the function of detecting c racks in a pipeline; if the sensors are arranged radially on the carrier ring set, the ultrasonic flaw detector acquires the function of measuring a pipeline wall thickness. The fact that the ultrasonic sensors are arranged on the rigid sensor carrier ensures most accurate and compact positioning of the ultrasonic sensors inside a pipeline, which improves diagnostic information quality and ensures highly accurate measurements of a pipeline cross-section, thus providing the flaw detector with the additional function of a profiler, apart from the function of a flaw detector as such. In order the ultrasonic flaw detector may pass turns in a small-radius pipeline, the sensor carrier of the ultrasonic flaw detector may consist of two sections pivotally connected to each other via a Cardan joint. The sensor carrier of the ultrasonic flaw detector comprises unified and interchangeable components, which enables to change the sensor carrier length and number of sections, depending on the operation conditions.
Fig. 1 shows the sensor carrier of an ultrasonic flaw detector for small-diameter pipelines;
Fig. 2 shows a general view of a section of the ultrasonic flaw detector sensor carrier;
Fig. 3 shows the assembly for fastening an ultrasonic sensor to a ring from a ring set used in the ultrasonic flaw detector sensor carrier.

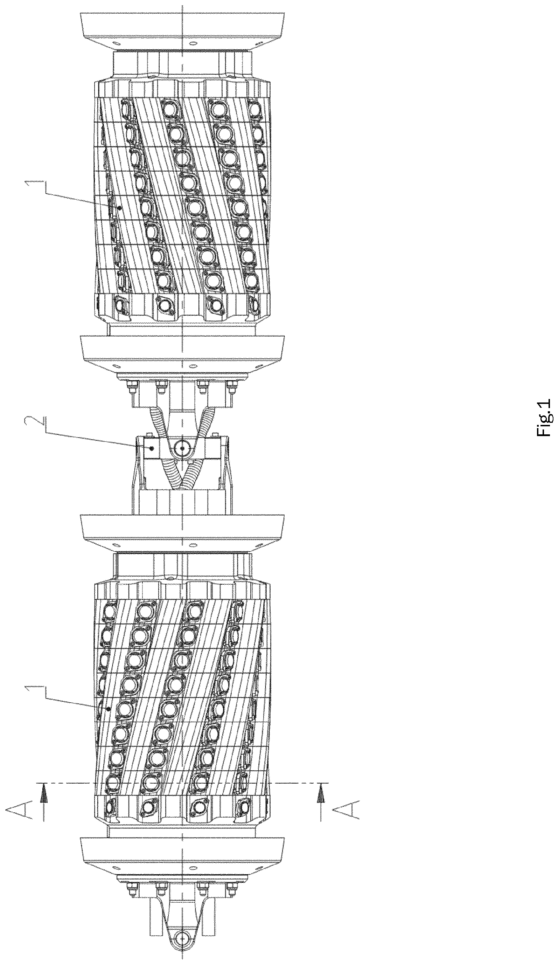

The following reference numbers are used in Fig. 1:
1 - section of the ultrasonic flaw detector sensor carrier;
2 - Cardan joint.

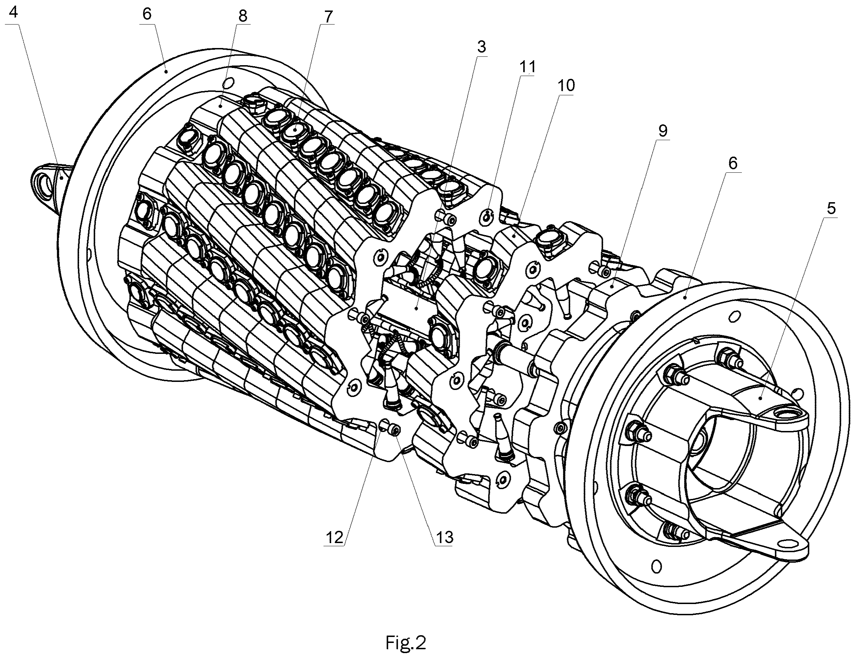

The following reference numbers are used in Fig. 2:
3 - central rod;
4 - head fork;
5 - tail fork;
6 - polyurethane collar;
7 - ultrasonic sensor;
8 - polyurethane head cone;
9 - polyurethane tail cone;
10 - ring set of the ultrasonic flaw detector sensor carrier;
11 - sleeve with smooth holes;
12 - sleeve with threaded holes;
13 - fastening screw.

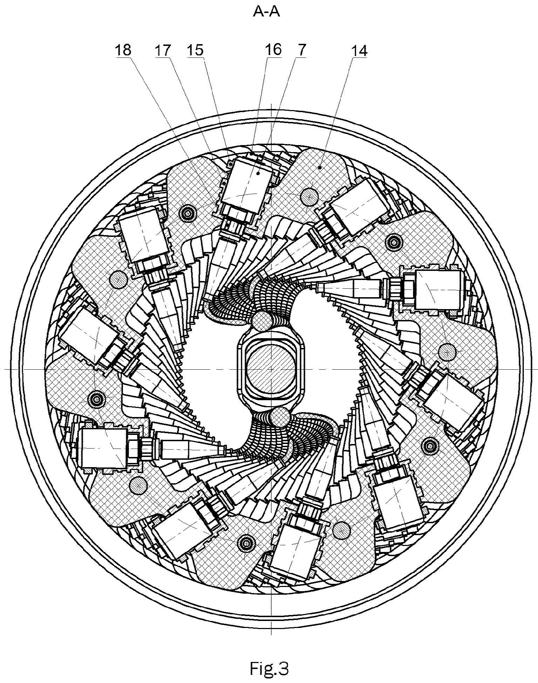

The following reference numbers are used in Fig. 3:
7 - ultrasonic sensor;
14 - ring from a ring set used in the ultrasonic flaw detector sensor carrier;
15 - sleeve for arrangement of an ultrasonic sensor;
16 - cover;
17 - screw for fastening an ultrasonic sensor;
18 - cable with a connector.

The claimed sensor carrier for an ultrasonic flaw detector consists of at least one section 1 of the ultrasonic flaw detector sensor carrier (Fig. 1). The sections 1 of the sensor carrier for an ultrasonic flaw detector (Fig. 1) are connected therebetween by means of a Cardan joint 2 (Fig. 1). The sensor carrier 1 (Fig. 1) comprises a central rod 3 (Fig. 2) on which a head fork 4 (Fig. 2 ) and a tail fork 5 (Fig. 2) are arranged. Centering collars 6 are attached to the flanges of the head and tail forks (Fig. 2). A polyurethane head cone 8 (Fig. 2) and a polyurethane tail cone 9 (Fig. 2) are arranged between the polyurethane collars 6 (Fig. 2). A ring set 10 (Fig. 2) is arranged between the cones 8 and 9 (Fig. 2). Ultrasonic sensors 7 (Fig. 2) are arranged in helical slots of the ring set 10 (Fig. 2), the sensors being equally spaces in radial and axial directions with a required pitch. A ring 14 (Fig. 3) of the ultrasonic flaw detector sensor carrier has two groups of sleeves arranged alternately: sleeves 11 with smooth holes (Fig. 2) and sleeves 12 with threaded holes (Fig. 2). The first head semi-rigid ring 14 (Fig. 3) is attached to the polyurethane head cone 8 (Fig. 2) by means of fastening screws 13 (Fig. 2) passing through holes of the sleeves with the smooth holes 11 (Fig. 2). The following rings are attached to the previous rings 14 (Fig. 3) by means of the fastening screws 13 (Fig. 2) passing through the holes of the sleeves 11 with the smooth holes (Fig. 2) and being screwed into the sleeves 12 with the threaded holes (Fig. 2). The eddy-current sensor 7 (Fig. 3) is arranged on the ring 14 (Fig. 3) in a sleeve 15 (Fig. 3) and is fixed by a cover 16 (Fig. 3) by means of screws 17 (Fig. 3). A cable with a connector 18 is connected to the inner end face of the sensor (Fig. 3).

## Claims

1. A sensor carrier for an ultrasonic flaw detector having at least one section, said section comprising a central rod (3) having a head fork (4) and a tail fork (5) arranged thereon; flanges of said forks having centering collars attached thereto; disposed between said flanges a polyurethane head cone (8), a polyurethane tail cone (9) and a set of rings (10) with ultrasonic sensors (7) arranged thereon, wherein an outer diameter of the sensor carrier is not greater than a value of maximum permissible narrowing of a pipeline, rings of the ring set of the sensor carrier are provided with two groups of sleeves arranged alternately, said groups of sleeves being sleeves (11) with smooth holes and sleeves (12) with threaded holes, wherein a head ring of the set of rings is secured to the head cone by means of fastening screws (13) that are screwed into threaded holes of the head cone through the sleeves with smooth holes, while the following rings of the set of rings are secured by means of the fastening screws through the sleeves with smooth holes in the threaded holes of the sleeves of the previous rings, the fastening screws being arranged in a staggered order.

2. The sensor carrier of Claim 1, **characterized in that** the ring is made to mounting the ultrasonic sensors in inclined or radial position.

3. The sensor carrier of Claim 1, **characterized in that** it has two sections pivotally connected to each other by means of a Cardan joint.

## Patentansprüche

1. Sensorträger für einen Ultraschallfehlerdetektor mit mindestens einem Abschnitt, wobei besagter Abschnitt einen zentralen Stab (3) umfasst, der darauf angeordnet einen Gabelkopf (4) und Gabelschwanz (5) aufweist; die Flansche der Gabeln weisen daran befestigte Zentrierkrägen auf; zwischen den besagten Flanschen ist ein Polyurethan-Kopfkonus (8), ein Polyurethan-Schwanzkonus (9) und ein Ringset (10) mit darauf angeordneten Ultraschallsensoren (7) angeordnet, wobei der Außendurchmesser des Sensorträgers nicht größer ist als der Wert der maximal zulässigen Verengung einer Rohrleitung, die Ringe des Ringsets des Sensorträgers mit zwei abwechselnd angeordneten Gruppen von Buchsen versehen sind, wobei die Buchsengruppen Buchsen (11) mit glatten Bohrungen und Buchsen (12) mit Gewindebohrungen sind, wobei ein Kopfring des Ringsets mittels Befestigungsschrauben (13) am Kopfkonus befestigt ist die durch die Buchsen mit glatten Bohrungen in die Gewindebohrungen des Kopfkonus geschraubt werden, während die folgenden Ringe des Ringsets mit Hilfe von Befestigungsschrauben durch die Buchsen mit glatten Bohrungen in den Gewindebohrungen der Buchsen des vorangehenden Rings befestigt werden, wobei die Befestigungsschrauben versetzt angeordnet sind.

2. Sensorträger nach Anspruch 1, **dadurch gekennzeichnet, dass** der Ring ausgebildet ist die Ultraschallsensoren in geneigter oder radialer Position zu befestigen.

3. Sensorträger nach Anspruch 1, **dadurch gekennzeichnet, dass** er zwei Abschnitte aufweist die mittels eines Kardangelenks schwenkbar miteinander verbunden sind.

## Revendications

1. Support de capteur pour un détecteur de défauts à ultrasons ayant au moins une section, ladite section comprenant un barreau central (3) ayant une fourche de tête (4) et une fourche de queue (5) agencées sur lui-même, des brides desdites fourches ayant des colliers de centrage attachés à elles-mêmes ; dans lequel entre lesdites brides sont disposés un cône de tête en polyuréthane (8), un cône de queue en polyuréthane (9), et un jeu de bagues (10) avec des capteurs à ultrasons (7) agencés sur celles-ci,
dans lequel un diamètre extérieur du support de capteur n'est pas plus grand qu'une valeur d'un rétrécissement maximum permissible d'un pipeline, des bagues du jeu de bagues du support de capteur sont pourvues de deux groupes de manchons agencés alternativement, lesdits groupes de manchons étant des manchons (11) dotés de trous lisses et des manchons (12) dotés de trous taraudés, dans lequel une bague de tête du jeu de bagues est attachée au cône de tête au moyen de vis de fixation (13) qui sont vissées dans des trous taraudés du cône de tête à travers les manchons dotés de trous lisses, alors que les bagues suivantes du jeu de bagues sont attachées au moyen des vis de fixation à travers les manchons dotés de trous lisses jusque dans les trous taraudés des manchons des bagues précédentes, les vis de fixation étant agencées dans un ordre étagé.

2. Support de capteur selon la revendication 1, **caractérisé en ce que** la bague est réalisée en vue de monter les capteurs à ultrasons en position inclinée ou en position radiale.

3. Support de capteur selon la revendication 1, **caractérisé en ce qu'**il comprend deux sections connectées de façon pivotante l'une à l'autre au moyen d'un joint de cardan.
